# EUROPÄISCHE PATENTSCHRIFT

(11) **EP 1 982 667 B1**
(45) Veröffentlichungstag und Bekanntmachung des Hinweises auf die Patenterteilung: **23.09.2009**
(21) Anmeldenummer: 07008056.9
(22) Anmeldetag: 20.04.2007
(51) Int. Cl.: A61C 1/05, A61C 1/08, A61C 1/12

(54) **Fluidbetriebenes medizinisches, insbesondere dentales, Handgriffelement**
Fluid driven medical, in particular dental, handpiece
Pièce à main médicale, notamment dentaire, entraînée par un fluide

(43) Veröffentlichungstag der Anmeldung: 22.10.2008
(73) Patentinhaber: W & H Dentalwerk Bürmoos GmbH, 5111 Bürmoos (AT)
(72) Erfinder: Rauchenzauner, Stephan, 5110 Oberndorf bei Salzburg (AT); Schmiedlechner, Karl, 5121 Ostermiething (AT)

(56) Entgegenhaltungen:
- WO-A-01/12095
- GB-A- 1 371 525
- US-A- 5 800 172

## Beschreibung

Die Erfindung betrifft ein fluidbetriebenes medizinisches, insbesondere dentales, Handgriffelement nach dem Oberbegriff des Anspruchs 1.

Aus der Patentschrift US 5,800,172 ist ein Turbinenhandstück bekannt, bei dem das mit Druckluft betriebene Laufrad, das das Werkzeug in Rotation versetzt, auch als Teil eines elektromechanischen Wandlers verwendet wird, der Strom für eine im Handstückkopf vorgesehene Lichtquelle erzeugt.

Der Nachteil dieses Turbinenhandstücks ist, dass während des Betriebs die Drehzahl des Laufrades und somit auch die Leistungserzeugung des Generators ständig schwanken. Derartige Schwankungen werden durch unterschiedliche Belastungen des Turbinenhandstücks hervorgerufen, zum Beispiel wenn der Anwender das mit dem Laufrad verbundene Werkzeug auf das zu bearbeitende Objekt aufsetzt oder wenn er gegebenenfalls über das Handstück Druck auf das zu bearbeitende Objekt ausübt. Die veränderliche Leistungserzeugung und -abgabe des Generators führt im Weiteren zu einer ständig schwankenden Lichtabgabe durch die Lichtquelle und insbesondere bei niedrigen Drehzahlen zu einer äußerst schwachen Ausleuchtung der Präparationsstelle.

Ein Handstück mit zwei Laufrädern, jedoch zwei getrennten Fluidleitungen, ist aus der WO-A-01/12095 bekannt.

Der vorliegenden Erfindung liegt daher die Aufgabe zugrunde ein fluidbetriebenes medizinisches, insbesondere dentales, Handgriffelement zu schaffen, das die oben angeführten Nachteile nicht aufweist und das insbesondere eine gleich bleibende Lichtabgabe aufweist.

Diese Aufgabe wird gemäß der vorliegenden Erfindung durch ein fluidbetriebenes medizinisches, insbesondere dentales Handgriffelement mit den Merkmalen des Anspruchs 1 gelöst. Besonders vorteilhafte Ausführungsformen sind in den Unteransprüchen angeführt.

Das erfindungsgemäße fluidbetriebene medizinische, insbesondere dentale Handgriffelement weist eine Anschlussvorrichtung zur Verbindung des Handgriffelements mit einer Fluidquelle, ein durch ein Fluid in Rotation versetzbares erstes Laufrad, das mit einem Werkzeug verbindbar oder verbunden ist, so dass das Werkzeug durch das Laufrad in eine Arbeitsbewegung versetzbar ist, und eine zwischen der Anschlussvorrichtung und dem ersten Laufrad angeordnete erste Fluidleitvorrichtung zur Förderung eines Fluidstroms zum oder vom ersten Laufrad auf. Das Handgriffelement ist des Weiteren mit einem Generator zur Erzeugung elektrischer Energie versehen, wobei der Generator ein zweites in Rotation versetzbares Laufrad umfasst, das mit zumindest einem Teilstrom des in der ersten Fluidleitvorrichtung förderbaren Fluidstroms antreibbar ist.

Durch diesen Aufbau wird eine konstante Leistungserzeugung und -abgabe des Generators erzielt, so dass eine konstante Leistungsversorgung eines mit dem Generator elektrisch verbundenen Verbrauchers gewährleistet ist. Als Verbraucher ist bevorzugt eine Strahlungsquelle, insbesondere eine zumindest eine Leuchtdiode umfassende Lichtquelle, vorgesehen. Sobald das Handgriffelement mit einer Fluidquelle verbunden ist, werden beide Laufräder durch das Fluid angetrieben, wobei die Verringerung der Drehzahl des ersten, das Werkzeug antreibende Laufrads ohne Auswirkung auf die Drehzahl des Generatorlaufrads bleibt. Selbst wenn das erste Laufrad und das damit verbundene Werkzeug durch die Einwirkung externer Kräfte zum Stillstand gebracht werden, ist somit die Leistungserzeugung des Generators und insbesondere die Strahlungsabgabe der Strahlungsquelle weiterhin gewährleistet.

Der Antrieb des zweiten Laufrads mit zumindest einem Teilstrom des in der ersten Fluidleitvorrichtung förderbaren Fluidstroms bewirkt des Weiteren einen erheblichen Vorteil bei der Ausgestaltung des Handgriffelements, insbesondere eine Vereinfachung des Aufbaus der Anschlussvorrichtung und des mit der Anschlussvorrichtung verbundenen Versorgungssystems, zum Beispiel eines Versorgungsschlauchs, der das Handgriffelement mit der Fluidquelle verbindet. Die Anschlussvorrichtung kann in bekannter Weise zum Beispiel als Steck-, Schraub-, Klemm- oder Drehkupplung ausgebildet sein, wobei unabhängig von der Kupplungsart der Aufbau und die Herstellung der Anschlussvorrichtung möglichst einfach sein soll. Dies wird durch den Antrieb des zweiten Laufrads mit zumindest einem Teilstrom des in der ersten Fluidleitvorrichtung förderbaren Fluidstroms erreicht, da dadurch für den Antrieb beider Laufräder in der Anschlussvorrichtung nur eine Fluidleitvorrichtung oder eine Fluidleitung vorzusehen ist.

Als Generatoren werden im Folgenden insbesondere elektrodynamische oder elektromechanische Wandler zur Erzeugung elektrischer Energie verstanden. Zum Antrieb dieser Generatoren wird ein Fluid oder Fluidgemisch verwendet, zum Beispiel eine Flüssigkeit oder ein Gas, insbesondere Wasser oder Druckluft. Das zweite Laufrad kann unterschiedliche Gestalten oder Ausformungen aufweisen, so kann es zum Beispiel als Turbinenlaufrad, ähnlich den Laufrädern in druckluftbetriebenen Turbinenhandstücken, oder als Lamellenmotor oder Flügelzellenmotor, wie sie zum Beispiel in medizinischen Luftmotoren eingesetzt werden, ausgebildet sein.

Erfindungsgemäß umfasst der Begriff Handgriffelement gerade Handgriffe oder Handstücke, gebogene Handgriffe oder Handstücke, die im Dentalbereich oftmals als Winkelstücke bezeichnet werden, als auch Teile von Handgriffen. Derartige Teile werden zum Beispiel durch einen Griffabschnitt eines Handgriffs gebildet, der zum Beispiel mit verschiedenen Kopfabschnitten für unterschiedliche Werkzeuge oder mit Getrieben für unterschiedliche Über- oder Untersetzungen verbindbar ist. Die Teile von Handgriffen können jedoch auch als Zwischenstücke, Kupplungen, Adapter oder eigenständige Hülsenabschnitte ausgebildet sein.

In einem Ausführungsbeispiel sind das Generatorlaufrad und das erste Laufrad seriell angeordnet. Das Fluid durchströmt dabei zuerst den Generator und wird anschließend zum stromabwärts gelegenen ersten Laufrad weitergeleitet. Der Aufbau ist bei diesem Ausführungsbeispiel besonders einfach, da zur Leitung des Fluids und zur Versorgung der beiden Laufräder mit dem Fluid nur eine einzige Fluidleitvorrichtung benötigt wird.

In einem alternativen Ausführungsbeispiel sind das Generatorlaufrad und das erste Laufrad parallel angeordnet. Dabei sind eine erste Fluidleitvorrichtung, die die Anschlussvorrichtung und die Fluidquelle mit dem ersten Laufrad verbindet, sowie eine zweite Fluidleitvorrichtung zur Verbindung der Anschlussvorrichtung und der Fluidquelle mit dem Generator, vorgesehen, wobei die zweite Fluidleitvorrichtung mit der ersten verbunden ist oder von dieser abzweigt. Der Vorteil dieser Anordnung besteht insbesondere darin, dass die Kontamination des Generators durch Verschmutzungen und Partikel, die beim Betrieb des ersten Laufrads in die erste Fluidleitvorrichtung gesaugt werden, erschwert wird. Auch besteht damit die Möglichkeit, beide Laufräder mit Fluid mit in etwa demselben Fluiddruck und annähernd gleicher Fluidgeschwindigkeit zu versorgen, so dass für den Antrieb des Werkzeugs als auch für den Generator gleiche Laufradtypen, zum Beispiel Peltonräder, verwendet werden können.

In einem weiteren Ausführungsbeispiel ist der Generator zumindest teilweise in einer der beiden Fluidleitvorrichtung aufgenommen, bevorzugt ist der gesamte Generator in der Fluidleitvorrichtung aufgenommen. Damit wird in vorteilhafter Weise erreicht, dass der Generator zumindest teilweise oder in seiner Gesamtheit vom Fluid umströmt und / oder durchströmt und damit intensiv gekühlt wird. Um den Generator aufnehmen zu können, weist die Fluidleitvorrichtung in diesem Bereich einen vergrößerten Durchmesser auf, so dass eine Aufnahme, eine Weitung, ein Hohlraum oder eine Kammer entsteht, in die der Generator einsetzbar ist.

Die Fluidleitvorrichtung kann neben einem oder mehreren rohrförmigen, geraden oder gebogenen Leitungsabschnitten auch weitere Bauteile umfassen, zum Beispiel Bohrungen, Kanäle oder Hülsen. Insbesondere in dem Bereich mit dem vergrößerten Durchmesser ist die Fluidleitvorrichtung aus mehreren Bauteilen zusammengesetzt, die hülsen- oder trichterförmig ausgebildet sind. Unter dem Begriff Fluidleitvorrichtung ist damit auch die fluiddichte Verbindung mehrerer der oben genannten Bauteile zu verstehen. Um Druckschwankungen des Antriebfluids zu eliminieren, ist bevorzugt ein Regelventil in der Fluidleitvorrichtung vorgesehen.

In einem Ausführungsbeispiel ist der Generator zumindest teilweise von einer Außenhülle umgeben, die eine Patrone bildet und die lösbar in die Fluidleitvorrichtung einsetzbar ist. Das durch die Patrone gebildete Generatormodul umfasst dabei bevorzugt den Rotor mit der Rotorwelle, auf der das zweite Laufrad und der Rotormagnet befestigt sind, den Stator, die Lager zur drehbaren Lagerung der Rotorwelle, elektrische Kontakte zur Ableitung des vom Generator erzeugten elektrischen Stroms sowie die durch eine oder mehrere Hülsen gebildete Außenhülle. Besonders bevorzugt sind in der Patrone auch ein oder mehrere Leitelemente zur Lenkung des Fluidstroms und zur gerichteten Abgabe des Fluidstroms auf das zweite Laufrad und ein oder mehrere elektrische oder elektronische Bauteile, zum Beispiel ein Transformator oder Gleichrichter, die bevorzugt auf einer Platine befestigt sind, enthalten. Der Vorteil dieses Ausführungsbeispiels liegt in der einfachen Austauschbarkeit eines derartigen Generatormoduls, zum Beispiel bei Vorliegen eines Defekts.

Ist der Generator mit einer derartigen Außenhülle umgeben, so müssen eine oder mehrere Durchlässe wie zum Beispiel Aussparungen, Öffnungen oder Bohrungen vorgesehen sein, so dass das Antriebsfluid zum Generatorlaufrad geführt werden kann, insbesondere durch die Außenhülle zum im Inneren des Generators angeordneten Generatorlaufrads, und / oder dass das Antriebsfluid vom Generatorlaufrad abgeführt werden kann, insbesondere durch die Generatoraußenhülle nach außen. Bevorzugt ist die Generatoraußenhülle von der Fluidleitvorrichtung zumindest in einem Teilabschnitt beabstandet, so dass sich zwischen der Innenwand der Fluidleitvorrichtung und der Generatoraußenhülle ein Spalt befindet, der als Fluidkanal zur Leitung des Fluidstroms dient. Dieser Fluidkanal ist mit dem zumindest einen Durchlass in der Generatoraußenhülle verbunden oder grenzt an diesen, so dass der Fluidstrom zum Generatorlaufrad fließt und / oder vom Generatorlaufrad abfließt.

Der zumindest eine Durchlass ist besonders bevorzugt in der Nähe des Generatorlaufrads vorgesehen, so dass der Fluidstrom im Wesentlichen nur im Bereich des Generatorlaufrads im Inneren der Generatorpatrone fließt, wohingegen jener Abschnitt der Generatorpatrone, in dem der Stator, der Rotormagnet und die elektrischen und / oder elektronischen Bauteil angeordnet sind, vom Fluid nicht durchströmt wird, sondern nur äußerlich umströmt wird. Der Durchlass ist insbesondere in der Generatoraußenhülle angeordnet, so dass der Fluidstrom durch die Generatoraußenhülle leitbar ist. Der Vorteil dieser Fluidführung liegt sowohl in einer effektiven Kühlung und Wärmeabfuhr, da der gesamte Generator vom Fluid um- bzw. durchströmt wird, als auch in einer Verringerung der Verschmutzungsgefahr des Stators, des Rotormagnets und der elektrischen und / oder elektronischen Bauteile durch im Fluid enthaltene Staubpartikel, Niederschläge, Ausfällungen und insbesondere durch Schmiermittel zur Schmierung bewegter Teil im Handgriffelement.

In einem Ausführungsbeispiel weist das Handgriffelement eine längliche Form mit einem ersten Ende und einem zweiten Ende auf, wobei die erste Fluidleitung und / oder die zweite Fluidleitung sich zumindest in einem Abschnitt im Wesentlichen in axialer Richtung zwischen den beiden Ende des Handgriffelements erstrecken, so dass der Fluidstrom zumindest in diesem Abschnitt in axialer Richtung förderbar ist, und wobei zumindest ein Leitelement zur tangentialen und / oder radialen Umlenkung des Fluidstroms auf das zweite Laufrad vorgesehen ist. In einem weiteren Ausführungsbeispiel weist das Handgriffelement eine längliche Form mit einem ersten Ende und einem zweiten Ende auf, wobei die Rotationsachse des Generatorlaufrads sich im Wesentlichen in axialer Richtung zwischen diesen beiden Enden erstreckt und wobei das Generatorlaufrad derart im Handgriffelement angeordnet ist, dass es vom Fluidstrom tangential und / oder radial anströmbar ist. In beiden Ausführungsbeispielen ist der Generator bzw. die Generatorpatrone somit als lang gestreckte, bevorzugt zylindrische Einheit aufgebaut, die eine große äußere Oberfläche aufweist, an der ein Kühlfluid vorbeigeführt werden kann, so dass eine effektive Wärmeabfuhr erzielt wird.

Aufgrund der axialen Fluidumströmung des länglich ausgebildeten Generators ist es insbesondere notwendig ein oder mehrere Leitelemente vorzusehen, die das Fluid fassen und derart auf das Generatorlaufrad lenken, dass dieses optimiert anströmbar und mit hohem Wirkungsgrad betreibbar ist. Das Leitelement weist dazu unterschiedliche geometrische Elemente auf, zum Beispiel Rillen, Kanäle, Flügel oder Schaufeln.

Bevorzugt ist der Generator mit einer einteiligen rotierbare Generatorwelle versehen, auf der das zweite Laufrad und der Rotor angeordnet sind, wobei zumindest ein Lager, das in verbautem Zustand keine externe, d.h. von außerhalb des Handgriffelements einzubringende, Schmiermittelzufuhr benötigt, insbesondere ein Gleitlager, ein Hydrolager, ein Luftlager oder zumindest ein keramisches Material aufweisendes Wälzlager zur Lagerung der Generatorwelle vorgesehen ist. Der Vorteil der Verwendung dieser Lager besteht darin, dass die Gefahr des Ausfalls des Generators durch Steckenbleiben des Rotors und der Generatorwelle deutlich reduziert bzw. eliminiert wird.

In vielen Handgriffelementen sind bewegte Bauteile enthalten, die für einen dauerhaften Betrieb wiederholt mit einem Schmiermittel geschmiert werden müssen. Dies erfolgt üblicherweise durch ein ungezieltes Einbringen des Schmiermittels in das Handgriffelement, zum Beispiel in die Fluidleitvorrichtung, und durch Förderung des Schmiermittels durch das Handgriffelement und an den im Handgriffelement angeordneten Bauteilen vorbei oder durch diese hindurch bis zu dem eigentlich zu schmierenden Bauteil. Diese Vorgehensweise bringt es mit sich, dass das Schmiermittel nicht nur an dem zu schmierenden Bauteil haftet, sondern auch an vielen anderen Bauteilen, zum Beispiel am und im Generator.

Bei der Verwendung von nicht geeigneten Schmiermitteln oder nach mehrmaliger Sterilisation kann es zu Veränderungen des Schmiermittels kommen, insbesondere zu Viskositätsänderungen und Verfestigungen des Schmiermittels. In Versuchen stellte die Anmelderin fest, dass es durch diese Veränderungen des Schmiermittels oftmals zu einer vollständigen Blockade des Generators, insbesondere der Generatorwelle, durch Verkleben der Lager, die die Generatorwelle lagern, kam. Die Blockade der Generatorwelle war derart fest, dass auch die Förderung von Fluid durch den Generator die blockierte Welle nicht mehr lösen konnte, so dass der gesamte Generator und in Folge auch das Handgriffelement nicht mehr zu verwenden waren. Überraschender Weise erwiesen sich insbesondere Gleitlager, die selbst keine externe Schmiermittelzufuhr benötigen und die aufgrund ihrer kompakten Bauweise den für andere Bauteile im Handgriffelement zugeführten Schmiermittel nur wenige Haftflächen bietet, an denen sich die Schmiermittel anlagern und verfestigen können, als gegenüber diesen Verstopfungen und Blockaden erheblich weniger anfällig als andere getestete Lagertypen. Die Verwendung von Wälzlagern mit keramischen Bauteilen, zum Beispiel keramischen Laufbahnen und / oder keramischen Wälzkörpern, oder von anderen Wälzlagern, die ohne Schmiermittel betreibbar sind, verringert ebenfalls die Gefahr der Blockade der Generatorwelle durch Veränderungen des Schmiermittels.

Zur axialen Lagerung der Generatorwelle wird in einem Ausführungsbeispiel ein Punktlager verwendet, das stromabwärts des zweiten Laufrads angeordnet ist. Die Generatorwelle weist dabei ein abgerundetes oder spitzes Ende auf, das einen Lagerkörper mit einer abgerundeten oder spitzen Oberfläche aufweist, zum Beispiel eine Kugel, eine Halbkugel, einen Kegel oder einen Kegelstumpf. Durch die Anordnung des Punktlagers stromabwärts des zweiten Laufrads wird in vorteilhafter Weise eine äußerst effektive Lagerung der Generatorwelle erreicht, ohne dafür eine weitere Fixierung oder Vorspannung der Generatorwelle zu benötigen, da der Fluidstrom das Laufrad und die damit verbundene Generatorwelle selbsttätig in Richtung des Punktlagers drückt. Die Punktlagerung ermöglicht somit insbesondere in Kombination mit den Gleitlagern eine einfache, zuverlässige und kostengünstige Lagerung der Generatorwelle. Die Punktlagerung bewirkt auch eine minimierte Reibung zwischen der Generatorwelle und dem Lagerkörper, so dass der Leistungsverlust des Generators gering gehalten wird.

In einem Ausführungsbeispiel umfasst das Handgriffelement eine elektrische Leitung zur Verbindung des Generators mit einem Verbraucher, wobei die elektrische Leitung die Wand der ersten und / oder zweiten Fluidleitvorrichtung durchsetzt, und wobei eine Dichtvorrichtung zur Abdichtung des Durchtritts der elektrischen Leitung durch die erste und / oder zweite Fluidleitvorrichtung vorgesehen ist. Insbesondere wenn der Generator in der Fluidleitvorrichtung aufgenommen ist, ist es von konstruktivem Vorteil die elektrische Leitung zumindest teilweise in der Fluidleitvorrichtung zu führen. Ist der Verbraucher außerhalb der Fluidleitvorrichtung angeordnet, so durchtritt der elektrische Leiter die Seitenwand der Fluidleitung, wobei zur Abdichtung und zur Vermeidung des Verlustes und des Austritts von Fluid eine Dichtvorrichtung zur Abdichtung des Durchtritts des elektrischen Leiters durch die Fluidleitvorrichtung vorgesehen ist. Bevorzugt ist die Dichtvorrichtung an einem Trägerelement angeordnet, an dem elektrische Kontaktelemente zur Verbindung der elektrischen Leitung mit dem Generator vorgesehen sind, besonders bevorzugt ist das Trägerelement als Teil der Fluidleitvorrichtung zur Leitung des Fluidstroms zum Generator ausgebildet.

In einem besonders bevorzugten Ausführungsbeispiel versorgt der Generator des Handgriffelements eine Beleuchtungsvorrichtung mit elektrischer Energie, wobei die Beleuchtungsvorrichtung einen hermetisch gekapselten Innenraum aufweist, in dem zumindest ein optisches Halbleiterelement angeordnet ist. Durch diesen Aufbau kann das gesamte Handgriffelement mit dem Generator und der Beleuchtungsvorrichtung sterilisiert oder aggressiven Reinigungs- oder Desinfektionsmitteln ausgesetzt werden. Kommt es dennoch zu einem Ausfall der Beleuchtungsvorrichtung durch Stöße oder insbesondere zu mechanischen Zerstörungen der Oberfläche durch Zerkratzen, so ist des Weiteren vorgesehen, die Beleuchtungsvorrichtung lösbar im Handgriffelement anzuordnen, so dass sie gegen eine neue, intakte Beleuchtungsvorrichtung austauschbar ist.

Bevorzugt ist der Generator exzentrisch in dem Handgriffelement verbaut, so dass ausreichend Platz vorhanden ist, um weitere im Handgriffelement aufgenommene Bauteile, insbesondere Medienleitungen am Generator vorbei führen zu können.

Die Erfindung wird nachfolgend anhand eines bevorzugten Ausführungsbeispiels und Bezug nehmend auf die beigefügten Zeichnungen erläutert:
Figur 1 zeigt ein fluidbetriebenes dentalmedizinisches Handgriffelement mit einem Generator, wobei das Generatorlaufrad und das Laufrad zum Antrieb des Werkzeugs durch eine gemeinsame Fluidleitungvorrichtung mit einem Antriebsfluid versorgt werden.
Figur 2 zeigt eine vergrößerte Darstellung des Generators aus Figur 1 in einer ersten Schnittebene, insbesondere zur Erläutung der Fluidleitvorrichtung.
Figur 3 zeigt eine vergrößerte Darstellung des Generators aus Figur 1 in einer zweiten Schnittebene, insbesondere zur Veranschaulichung der elektrischen Bauteile des Generators.

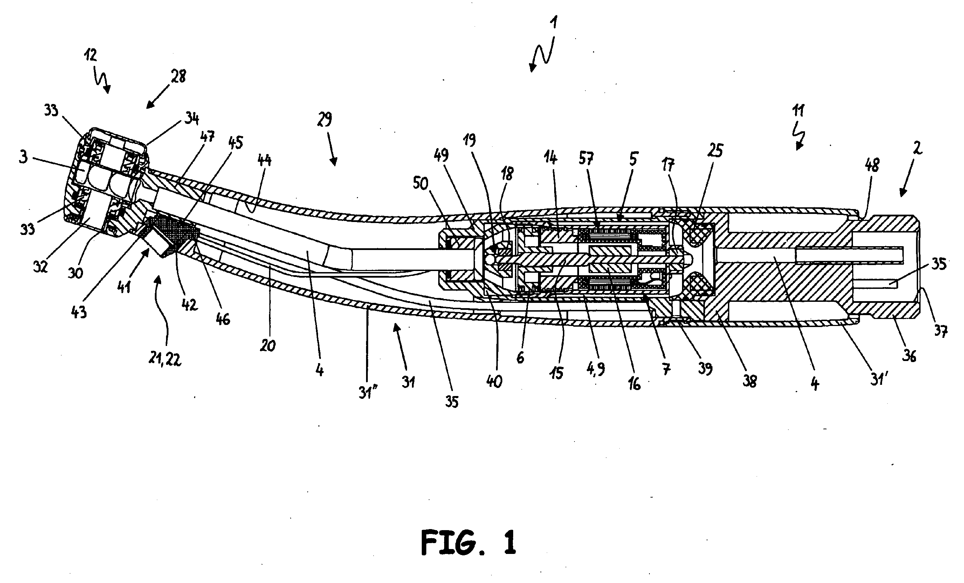

Das in Figur 1 dargestellte medizinische, insbesondere dentalmedizinische Handgriffelement 1 weist ein erstes Ende 11 und ein zweites Ende 12 auf. Das zweite Ende 12 ist als Kopfabschnitt 28 ausgebildet, an den lösbar ein länglicher Griffabschnitt 29 anschließt. Das Handgriffelement 1 ist als so genanntes Winkelstück ausgebildet, bei dem der Griffabschnitt 29 aus zwei zueinander gewinkelt angeordnete Abschnitten besteht und bei dem die Werkzeugöffnung 30 seitlich am Kopfabschnitt 28 angeordnet ist, so dass ein Behandlungswerkzeug quer zum Griffabschnitt 29 in den Kopfabschnitt 28 einsetzbar ist. Eine ein- oder mehrteilige Außenhülse 31 umgibt den Griffabschnitt 29 und den Kopfabschnitt 28. Selbstverständlich kann das Handgriffelement auch andere Außenformen, insbesondere eine gerade oder eine pistolenförmige Gestalt aufweisen.

Im Vorderbereich oder Kopfabschnitt 28 des Handgriffelements 1 befindet sich in bekannter Weise eine über die Werkzeugöffnung 30 zugängliche Werkzeugaufnahme 32. Die Werkzeugaufnahme 32 ist zumindest teilweise in einer Hohlwelle aufgenommen, die beweglich gelagert ist, insbesondere durch zwei Kugellager 33. Auf der Hohlwelle ist ein erstes Laufrad 3 befestigt, das durch ein Antriebsfluid, zum Beispiel Druckluft, gemeinsam mit der Hohlwelle und der Werkzeugaufnahme 32 in eine Drehbewegung versetzbar ist. Eine Werkzeuglösevorrichtung 34 mit einem Druckknopf erleichtert die Entnahme eines in die Werkzeugaufnahme 32 einsetzbaren Werkzeugs, zum Beispiel eines rotierenden Bohrers.

Das erste Laufrad 3 ist als Überdruckturbine ausgebildet, d.h. der im Fluid anliegende Druck wird zum Antrieb des Laufrads 3 verwendet und über das Laufrad 3 abgebaut, so dass der Druck (Fließdruck) des Antriebsfluids vor dem Laufrad 3 bzw. vor dem Auftreffen auf das Laufrad 3 höher ist als nach dem Laufrad 3. Die Versorgung des ersten Laufrads 3 mit Fluid erfolgt über eine Fluidleitvorrichtung 4, die sich von der Anschlussvorrichtung 2 durch das gesamte Handgriffelement 1 bis zum Kopfabschnitt 28 erstreckt. Am kopfnahen Ende der Fluidleitvorrichtung 4 tritt das Fluid als Freistrahl aus der Leitvorrichtung 4 aus und trifft auf das erste Laufrad 3. Das erste Laufrad 3 ist in einer Kammer aufgenommen, aus der zumindest ein Großteil des Fluids in eine Rückluftleitung eintritt. Die Rückluftleitung umfasst entweder eine eigene Leitung, die wiederum das Handgriffelement 1 durchsetzt, oder sie ist durch die Außenhülse 31 des Handgriffelements 1 gebildet.

Am ersten Ende 11 des Handgriffelements 1 ist eine Anschlussvorrichtung 2 zum direkten oder indirekten Anschluss des Handgriffelements 1 an ein Steuer- und / oder Versorgungseinrichtung vorgesehen. Die Anschlussvorrichtung 2 kann insbesondere als Steck-, Schraub-, Klemm- oder Drehkupplung ausgebildet sein, die mit einem Versorgungsschlauch verbindbar ist, in dem eine oder mehrere Medienleitungen angeordnet sind. In der Anschlussvorrichtung 2 sind mehrere Bohrungen, Kanäle oder Leitungen zur Übernahme von Medien vorgesehen, zum Beispiel eine Wasserleitung 35 und eine Fluid-oder Druckluftleitung 4. Die Wasserleitung 35 verläuft durch das Handgriffelement 1 bis zum Kopfabschnitt 28, wo das Wasser mit Druckluft vermischt und über Öffnungen am Kopfabschnitt 28 abgegeben wird.

Die Anschlussvorrichtung 2 ist in einem eigenen Teil 31' der Außenhülse 31 aufgenommen. Der Außenhülsenteil 31' ist über ein Gewinde 39 mit dem Außenhülsenteil 31" verbunden. Die Anschlussvorrichtung 2 hat eine lang gestreckte Form und ist an ihrem dem Kopfabschnitt 28 abgewandten Ende mit einem Gewinde 36 zur Verbindung mit dem Versorgungsschlauch und mit einer Aufnahme 37 für ein Kupplungsgegenstück des Versorgungsschlauchs versehen. An ihrem dem Kopfabschnitt 28 zugewandten Ende weist die Anschlussvorrichtung 2 eine flanschartige Verbreiterung 38 auf, die von Bohrungen für Schrauben durchsetzt ist, über die die Anschlussvorrichtung 2 mit Bauteilen im Außenhülsenteil 31" verbunden und befestigt ist. Alternativ ist die Anschlussvorrichtung 2 in dem Außenhülsenteil 31' aufgenommen und durch die Verschraubung der beiden Außenhülsenteile 31', 31" im Handgriffelement 1 verspannt.

An die Anschlussvorrichtung 2 bzw. an den durch die Anschlussvorrichtung 2 verlaufenden Teil der Fluidleitung 4 schließt der Generator 5 zur Erzeugung elektrischer Energie an. Das Fluid durchströmt zuerst den Generator 5 und wird anschließend zum stromabwärts gelegenen ersten Laufrad 3 weitergeleitet, das Generatorlaufrad 6 und das erste Laufrad 3 sind somit seriell oder hintereinander angeordnet. Die Fluidleitung 4 ist mit einem Abschnitt mit verbreitertem Durchmesser versehen, der eine Aufnahme 40 bildet, in die der Generator 5 vollständig einsetzbar ist.

Eine elektrische Leitung 20 verbindet den Generator 5 mit einem Verbraucher 21, zum Beispiel in Form einer Beleuchtungsvorrichtung 22. Die Beleuchtungsvorrichtung 22 ist in einer Öffnung 42 der Außenhülse 31 angeordnet und umfasst zumindest ein optisches Halbleiterelement, insbesondere eine Leuchtdiode (LED), besonders bevorzugt eine weiße LED. Die Leuchtdiode emittiert bevorzugt Strahlung mit einer Wellenlänge im Bereich von etwa 380 - 700 nm zur Beleuchtung der Präparationsstelle.

Die Beleuchtungsvorrichtung 22 umfasst ein Beleuchtungsmodul 41 mit dem zumindest einen optischen Halbleiterelement. Das Beleuchtungsmodul 41 befindet sich in der Lichtabgabeöffnung 42 der Außenhülse 31 des Handgriffelements 1, wobei zumindest der Großteil des Beleuchtungsmoduls 41 bzw. des optischen Halbleiterelements im Inneren des Handgriffelements 1 aufgenommen ist. Dadurch stört das Beleuchtungsmodul 41 die Handhabung des Handgriffelements 1 nicht. Durch die Anordnung des Beleuchtungsmoduls 41 in unmittelbarer Nähe des Kopfteils 28 ist für die Abgabe der Strahlung auf die Präparationsstelle kein Lichtleiter notwendig.

Das zumindest eine optische Halbleiterelement ist in einem Innenraum des Beleuchtungsmoduls 41 aufgenommen, wobei gemäß einem bevorzugten Ausführungsbeispiel der Innenraum gegenüber der Umgebung hermetisch abgeschlossen ist, so dass das optische Halbleiterelement gemeinsam mit dem Handgriffelement 1 unterschiedlichen Reinigungs- und Pflegemaßnahmen, insbesondere Sterilisationen unterzogen werden kann und vor externen Einflüssen, zum Beispiel Dampf, Verschmutzungen, Partikeln oder Reinigungs-, Desinfektions- oder Sterilisationsmitteln, geschützt ist. Der hermetisch abgeschlossene Innenraum wird von einem Sockel und von einer damit dicht verbundenen, zum Beispiel verschweißten, Kappe gebildet. An der Kappe ist des Weiteren ein transparentes Lichtabgabefenster vorgesehen, durch das die von dem optischen Halbleiterelement erzeugte Strahlung durchtreten kann. Anstelle des Lichtabgabefensters oder daran anschließend können weitere optische Elemente wie Lichtleiter oder Linsen vorgesehen sein. Diese optischen Elemente können als Teil des Beleuchtungsmoduls 41 oder als separate Bauteile ausgebildet sein.

Das Beleuchtungsmodul 41 besteht des Weiteren aus einer Fassung 43, die eine im Wesentlichen hülsenförmige, zylindrische Form hat und die von einer Bohrung durchsetzt ist. Die Fassung 43 ist bevorzugt aus elektrisch nicht leitendem Material hergestellt. In der Bohrung sind der Sockel und die Kappe aufgenommen. In dem dem Innenraum 44 des Handgriffelements 1 zugewandten Ende der Fassung 43 befindet sich des Weiteren ein Vergussmassekörper 45, der insbesondere durch ein Kunstharz, zum Beispiel Epoxidharz oder Silikonharz gebildet ist. Der Vergussmassekörper 45 umhüllt das Vorderende der elektrischen Leitung 20, die mit dem Generator 5 verbunden ist, insbesondere jenen Abschnitt der Leitung 20, der frei von einem isolierenden Schutzmantel ist. Der Vergussmassekörper 45 umgibt auch die elektrischen Kontakte der Leuchtdiode. Die Leitung 20 und die Kontakte sind durch den Vergussmassekörper 45 unlösbar miteinander verbunden. Bevorzugt sind die Leitung 20 und die Kontakte zusätzlich noch miteinander verlötet, verschweißt oder gekrimpt (verquetscht). Der Vergussmassekörper 45 dichtet das Beleuchtungsmodul 41 und die Kontakte auch ab.

Am Außenmantel der Fassung 43 ist in einer Nut ein Dichtelement, zum Beispiel ein Dichtring aufgenommen, der zwischen der Außenhülse 31 des Handgriffelements 1 und dem Außenmantel der Fassung 43 geklemmt ist. Das Dichtelement dichtet den Innenraum 44 des Handgriffelements 1 und die darin enthaltenen Bauteile von der Umgebung ab und verhindert das Eindringen von Partikeln, Verschmutzungen, Behandlungsmedien, Reinigungsmitteln etc. in das Handgriffelement 1 sowie den Austritt von Schmiermittel aus dem Inneren des Handgriffelements 1. Eine derartige Dichtung kann alternativ oder zusätzlich auch am Handgriffelement 1 selbst angebracht sein.

An der Fassung 43 sind des Weiteren Befestigungsmittel vorgesehen, die der Befestigung der Beleuchtungsvorrichtung 22 am Handgriffelement 1 dienen. Die Befestigungsmittel umfassen zum Beispiel einen Flansch 46, der an einem Ende der Fassung 43 angeordnet ist, und den Außenmantel der Fassung 43. Das Beleuchtungsmodul 41 ist in die Lichtabgabeöffnung 42 eingesteckt, wobei der Außenmantel der Fassung 43 so bemessen ist, dass er eine klemmende Verbindung mit der Außenhülse 31 des Handgriffelements 1 eingeht. Die Außenhülse 31 weist zur Vergrößerung der reibenden oder klemmenden Kontaktfläche mit dem Außenmantel der Fassung 43 ein Befestigungselement auf, zum Beispiel in Form von in den Innenraum 44 ragenden Vorsprüngen, Ringschultern etc. Ist die Fassung 43 vollständig in die Lichtabgabeöffnung 42 eingesteckt, so kontaktiert der Flansch 46 das freie Ende des Befestigungselements, wodurch einerseits eine zusätzliche Fixierung als auch eine genaue Positionierung des Beleuchtungsmoduls 41 in der Lichtabgabeöffnung 42 erreicht wird.

Die Befestigung des Beleuchtungsmoduls 41 in der Lichtabgabeöffnung 42 wird zusätzlich auch noch durch den Kopfabschnitt 28 bewirkt. Der Kopfabschnitt 28 weist an seiner dem Griffabschnitt 29 zugewandten Seite einen Fortsatz 47 auf, der zur Verbindung des Kopfabschnitts 28 mit dem Griffabschnitt 29 in den Innenraum 44 einsteckbar ist. Der Fortsatz 47 ist derart bemessen, dass er, wenn er in den Innenraum 44 eingesetzt ist, das Beleuchtungsmodul 41 kontaktiert und in Richtung der Lichtabgabeöffnung 42 drückt, so dass das Beleuchtungsmodul 41 fest in der Lichtabgabeöffnung 42 fixiert ist.

Die Energieversorgung des zumindest einen optischen Halbleiterelements erfolgt über die elektrischen Pins oder Kontakte des Halbleiterelements, die elektrische Leitung 20 und das Trägerelement 25, das, wie weiter unten noch beschrieben, weitere elektrische Kontakte zum Anschluss an den Generator 5 umfasst.

Bevorzugt ist das Beleuchtungsmodul 41 als lösbares oder austauschbares Modul ausgebildet, wobei der Austausch insbesondere über den Innenraum 44 des Handgriffelements 1 und die Kupplungsöffnung 48 erfolgt. Alternativ ist das Beleuchtungsmodul 41 durch die Lichtabgabeöffnung 42 aus dem Handgriffelement 1 entfernbar. Bevorzugt ist auch der Generator 5 als austauschbarer Generator oder als Generatorpatrone ausgebildet, die ebenfalls über die Kupplungsöffnung 48 aus dem Handgriffelement 1 entfernbar sind.

In beiden Fällen muss der Anwender zuerst die Anschlussvorrichtung 2 und das Außenhülsenteil 31' vom Handgriffelement 1 trennen. Die Anschlussvorrichtung 2 ist bevorzugt durch mehrere Schrauben mit im Inneren des Handgriffelements 1 angeordneten Bauteilen verbunden und durch Lösen dieser Schrauben aus dem Handgriffelement 1 entnehmbar. Nach Lösen des Außenhülsenteil 31' ist der verbreitete Abschnitt der Fluidleitung 4 freigelegt, in den der Generator 5 bzw. die Generatorpatrone ohne weitere Befestigung eingeschoben sind, so dass der Generator in einfacher Weise aus der Fluidleitung entnommen werden kann.

Zur Entnahme des Beleuchtungsmoduls 41 löst der Anwender in einem nächsten Schritt die Trägerhülse 49, die Teil des verbreiterten Abschnitts der Fluidleitung 4 ist, vom Handgriffelement 1. Dazu sind eine in einer Querbohrung der Außenhülse 31 aufgenommene Schraube zur axialen Fixierung der Trägerhülse 49 und die Hohlschraube 50 zu lösen. Anschließend ist der Kopfabschnitt 28 des Handgriffelements 1 vom Griffabschnitt 29 zu trennen, wodurch das durch den Kopfabschnitt 28 in die Lichtabgabeöffnung 42 gedrückte Beleuchtungsmodul 41 aus der Lichtabgabeöffnung 42 lösbar ist. Der Anwender übt nun von außen mit einem Finger oder einem Hilfswerkzeug Druck auf das Beleuchtungsmodul 41 aus, so dass dieses in den Innenraum 44 des Handgriffelements 1 verschoben wird. Über die Kupplungsöffnung 48 zieht der Anwender schließlich das Beleuchtungsmodul 41 und bevorzugt auch die Leitung 20 aus dem Handgriffelement 1 heraus.

Das Einfügen des Generators 5 und des Beleuchtungsmoduls 41 in das Handgriffelement 1 erfolgt ebenfalls über den Innenraum 44 und die Kupplungsöffnung 48, in umgekehrter Reihenfolge wie es für das Entfernen beschrieben wurde.

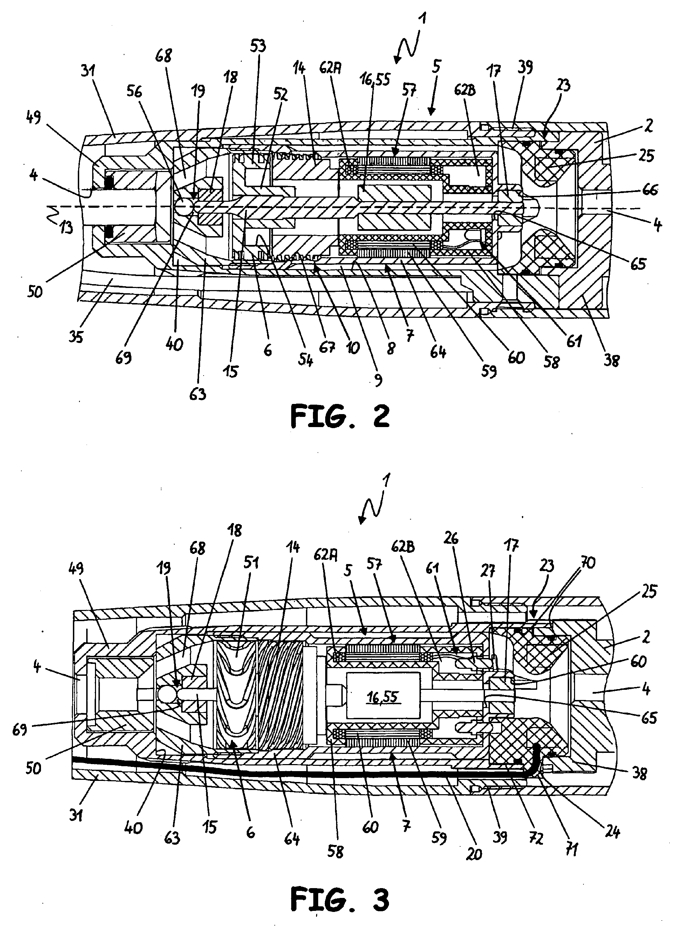

Der detaillierte Aufbau des Generators 5 wird im Folgenden unter Bezugnahme auf die beiden Figuren 2 und 3 erläutert.

Der Generator 5 umfasst eine Generatorwelle 15, auf der das zweite Laufrad oder Generatorlaufrad 6 und der Rotor 16 befestigt sind. Das Generatorlaufrad 6 ist als Gleichdruckturbine ausgebildet, d.h. der Druck (Fließdruck) des Antriebsfluids ist vor und nach dem Laufrad 6 in etwa gleich. Bei Betrieb ist das Generatorlaufrad 6 vollständig in das Antriebsfluid eingetaucht. Wie insbesondere aus Figur 3 zu erkennen ist, weist das zweite Laufrad 6 mehrere Schaufeln 51 auf, die durch in die Oberfläche des Laufrads 6 eingearbeitete, insbesondere gefräste, im Wesentlichen U- oder V-förmige Nuten voneinander getrennt sind. Die Nuten weisen über ihre gesamte Länge in etwa eine gleich bleibende Tiefe und Breite auf. Das Antriebsfluid durchfließt diese Nuten, wodurch das Laufrad 6 und damit die Generatorwelle 15 mit dem Rotor 16 in Rotation versetzt wird.

Die durch die Generatorwelle 15 verlaufende Rotationsachse 13 des Generatorlaufrads 6 erstreckt sich im Wesentlichen in axialer Richtung zwischen den beiden Enden 11, 12 des Handgriffelements 1. Das zweite Laufrad 6 ist derart im Handgriffelement 1 angeordnet, dass es vom Fluidstrom tangential und / oder radial anströmbar ist. Zur Verringerung des Gewichts ist das Generatorlaufrad 6 T-förmig ausgebildet, umfassend ein hülsenförmig, zylindrisch ausgebildetes und von einer Bohrung durchsetztes Zentralelement 52 zum Befestigen des Laufrads 6 an der Generatorwelle 15 und ein vom Zentralelement 52 gewinkelt abstehendes, ringförmiges Schaufelelement 53 mit den Schaufeln 51 und Nuten. Das Schaufelelement 53 ist vom Zentralelement 52 durch eine Ringnut 54 beabstandet.

Der Rotor 16 ist als Magnetelement 55 ausgebildet, wobei das Magnetelement 55 ein Einfachmagnet oder ein Segmentmagnet mit mehreren Polpaaren sein kann. Das Magnetelement 55 ist bevorzugt zylindrisch geformt und ist mit einer zentralen Bohrung versehen, durch die die Generatorwelle 15 verläuft. Die Generatorwelle 15 weist zwei Teilbereiche mit unterschiedlichen Durchmessern auf, wobei am Teilbereich mit dem größeren Durchmesser das Laufrad 6 und am Teilbereich mit dem geringeren Durchmesser das Magnetelement 55 angeordnet ist. Die Verringerung des Durchmessers der Generatorwelle 15 im Bereich des Magnetelements 55 bezweckt eine Erhöhung der Leistungserzeugung des Generators 5 durch zur Verfügung stellen von möglichst viel magnetischem Material bei gleichzeitig möglichst geringem Durchmesser des Rotors 16 und damit des gesamten Generators 5. Der Außendurchmesser des Magnetelements 55 beträgt bevorzugt etwa 3,4 - 4,2 mm, besonders bevorzugt etwa 3,7 - 3,9 mm. Der Innendurchmesser der Bohrung des Magnetelements 55 und entsprechend der geringere Durchmesser der Generatorwelle 15 betragen bevorzugt etwa 0,7 - 1,2 mm, besonders bevorzugt 0,9 -1,1 mm.

Die im Wesentlichen axial verlaufende Anordnung der Generatorwelle 15 und der Rotationsachse 13 des zweiten Laufrads 6 und die Befestigung des zweiten Laufrads 6 und des Rotors 16 auf einer gemeinsamen Welle in Form der Generatorwelle 15 ermöglicht die Lagerung dieser Bauteile durch nur zwei Lager bzw. an nur zwei Lagerstellen. Gemäß der in den Figuren 2 und 3 dargestellten bevorzugten Ausführungsform sind die beiden Lagerstellen an den jeweiligen Enden der Generatorwelle 15 vorgesehen. Beide Lagerstellen umfassen je ein Gleitlager 17, 18. An der dem Kopfabschnitt 28 zugewandten Lagerstelle ist des Weiteren ein Punktlager 19 zur axialen Lagerung der Generatorwelle 15 vorgesehen, das eine Kugel 56 sowie das abgerundete Vorderende der Generatorwelle 15 umfasst. Das Punktlager 19 ist stromabwärts des zweiten Laufrads 6 angeordnet, so dass bei Betrieb des Generators 5 der Fluidstrom das zweite Laufrad 6 und die damit verbundene Generatorwelle 15 selbsttätig in Richtung des Punktlagers 19 drückt.

Radial um den Rotor 16 ist der Stator 57 angeordnet. Der Stator 57 umfasst eine aus Kunststoff bestehende, bevorzugt durch Druck- oder Spritzguss hergestellte, Statorhülse 58, zumindest ein Magnetflusselement 59, zumindest eine Spule 60 und mit der zumindest einen Spule 60 verbundene elektrische Kontaktelemente 61 zur Abgabe des vom Generator 5 erzeugten elektrischen Stroms an den Verbraucher 21. Die Statorhülse 58 weist eine zentrale Bohrung auf, in der der Rotor 16 aufgenommen ist und durch die die Generatorwelle 15 verläuft. Die beiden Enden der Statorhülse 58 sind doppelwandig ausgebildet, wobei in den ringförmigen, um den zylindrischen Zentralteil der Statorhülse 58 verlaufenden Zwischenräumen 62A, 62 B zwischen den beiden Wänden zumindest teilweise die Spule 60, die elektrischen Kontaktelemente 61 und gegebenenfalls weitere elektrische oder elektronische Bauteile, wie zum Beispiel ein Transformator oder ein Gleichrichter angeordnet sind. Das zumindest eine Magnetflusselement 59 ist zwischen den beiden freien Enden der außen liegenden Wandabschnitte der Statorhülse 58 angeordnet. Zur Fixierung und zum Schutz sind die Statorhülse 58, das zumindest eine Magnetflusselement 59, die zumindest eine Spule 60, die elektrischen Kontaktelemente 61 und die elektrischen oder elektronischen Bauteile mit einer Vergussmasse, zum Beispiel einem Kunstharz, insbesondere Epoxydharz oder Silikonharz, vergossen.

Werden das zweite Laufrad 6 und der Rotor 16 durch das Antriebsfluid in Rotation versetzt, so wird in bekannter Weise durch das wechselnde Magnetfeld des Magnetelements 55 in der zumindest einen Spule 60 elektrischer Wechselstrom induziert.

Zwischen dem Generatorlaufrad 6 und dem Stator 57 bzw. dem Rotor 16 ist zumindest ein Leitelement 14 zur tangentialen und / oder radialen Umlenkung des Fluidstroms auf das zweite Laufrad 6 vorgesehen. Wie insbesondere aus Figur 3 zu erkennen ist, weist das Leitelement 14 mehrere spiralförmige Nuten oder Rillen auf, die zum zweiten Laufrad 6 orientiert sind und die das Fluid auf das Laufrad 6 und insbesondere in dessen Schaufel nuten lenken. Das Leitelement 14 ist ebenfalls mit einer zentralen Bohrung versehen, so dass es von der Generatorwelle 15 durchsetzbar ist.

Der Generator 5 ist zur einfachen Austauschbarkeit als Generatorpatrone ausgebildet. Dazu ist eine Außenhülle 7 vorgesehen, die aus einem Lagerschild 63 und einer zylindrischen Generatorhülse 64 besteht, die über ein Gewinde miteinander verbunden sind. An dem dem Gewinde gegenüber liegenden Ende ist die Generatorhülse 64 durch eine Seitenwand verschlossen, wobei in der Seitenwand eine Öffnung 65 vorgesehen ist, die von einer ringförmigen Wand umgeben ist. Die Seitenwand und die ringförmige Wand bilden gemeinsam eine Aufnahme 66, die als erste Lagerstelle dient und in die das Gleitlager 17 eingesetzt ist. Die Generatorwelle 15 durchsetzt die Öffnung 65 und ragt mit ihrem ersten Ende bis in die Aufnahme 66. In der Generatorhülse 64 sind des Weiteren mehrere Bohrungen 67 vorgesehen, die einen Durchlass 10 bilden und die den Generator 5 und das Innere der Außenhülle 7 mit der Fluidleitvorrichtung 4 verbindet, so dass das Antriebsfluid zum zweiten Laufrad 6 fließen kann.

Das Lagerschild 63 besteht aus einem hülsenförmigen Abschnitt, der, wenn das Lagerschild 63 mit der Generatorhülse 64 verbunden ist, das Generatorlaufrad 6 umgibt, und aus einem daran anschließenden, sich verjüngendem Abschnitt mit mehreren Bohrungen 68, die das Antriebsfluid nach dem Durchtritt durch das Generatorlaufrad 6 sammeln und an einen Abschnitt der Fluidleitung 4 mit einem geringeren Durchmesser abgeben. Im Zentrum des Lagerschilds 63 ist die zweite Lagerstelle für die Generatorwelle 15 vorgesehen. Diese Lagerstelle umfasst eine Aufnahme 69 mit einer Bohrung mit unterschiedlichen Durchmessern, wobei in dem ersten, dem Kopfabschnitt 28 zugewandten Bohrungsabschnitt mit dem geringeren Durchmesser die Kugel 56 des Punktlagers 19 und im zweiten, dem Kopfabschnitt 28 abgewandten Bohrungsabschnitt mit dem größeren Durchmesser das zweite Gleitlager 18 sitzt. Die Generatorwelle 15 ragt in die Aufnahme 69, insbesondere durch den Bohrungsabschnitt mit dem größeren Durchmesser bis in den Bohrungsabschnitt mit dem geringeren Durchmesser.

Der Generator 5 bzw. die Generatorpatrone ist in einem Abschnitt der Fluidleitvorrichtung 4 mit einem vergrößerten Durchmesser, der eine Aufnahme 40 bildet, aufgenommen. Der Abschnitt der Fluidleitvorrichtung 4 mit dem vergrößerten Durchmesser umfasst das Trägerelement 25 und die daran anschließende Trägerhülse 49. Der Generator 5 ist in den die Aufnahme 40 bildenden Innenraum der Trägerhülse 49 eingeschoben und wird durch das auf den Generator 5 und die Trägerhülse 49 aufsteckbare Trägerelement 25 fixiert.

Die Trägerhülse 49 weist an ihrem dem Kopfabschnitt 28 zugewandten Ende einen Abschnitt mit einem verringerten Durchmesser auf, in dem eine Hohlschraube 50 angeordnet ist. Die Hohlschraube 50 ist über ein Gewinde mit einem als Rohrleitung mit geringerem Durchmesser ausgebildeten Abschnitt der Fluidleitung 4, der durch eine Öffnung der Trägerhülse 49 tritt, verbunden. Ein an der Hohlschraube 50 angebrachtes Dichtelement verhindert den Austritt des Antriebfluids aus der Fluidleitung 4. Nach dem Passieren des Generatorlaufrads 6 durchströmt das Antriebsfluid somit das Lagerschild 63 und die Innenbohrung der Hohlschraube 50 und gelangt über den mit geringerem Durchmesser ausgebildeten Abschnitt der Fluidleitvorrichtung 4 zum ersten Laufrad 3.

Die Generatoraußenhülle 7, insbesondere Generatorhülse 64, ist von der die Generatoraußenhülle 7 umgebenden Innenwand 8 der Fluidleitung 4 zumindest in einem Abschnitt beabstandet, so dass dazwischen ein Fluidkanal 9 zur Leitung des Fluidstroms gebildet ist. Der Fluidkanal 9 mündet in einen Durchlass 10 in Form mehrerer Bohrung 67 zur Leitung des Fluidstroms zum zweiten Laufrad 6. Der Durchlass 10 ist bevorzugt rund um das Leitelement 14 angeordnet, so dass das im Fluidkanal 9 in axialer Richtung fließende Antriebsfluid direkt in das Leitelement 14 eintritt und durch dieses in eine für die Anströmung des Generatorlaufrads 6 optimale tangentiale und / oder radiale Fließrichtung umgelenkt wird.

Das Trägerelement 25 ist eine, bevorzugt durch Spritzguss, hergestellte Kunststoffhülse mit einer Innenbohrung. Das Trägerelement 25 schließt an seinem ersten Ende an den Generator 5 und die Trägerhülse 49 und an seinem zweiten Ende an die Anschlussvorrichtung 2 an. Durch die Innenbohrung des Trägerelements 25 fließt das Antriebsfluid von der Anschlussvorrichtung 2 in den Fluidkanal 9, so dass das Trägerelement 25 als Teil der Fluidleitvorrichtung 4 ausgebildet ist.

Zusätzlich sind am Trägerelement 25 Teile der elektrischen Verbindung zwischen dem Generator 5 und dem Verbraucher 21 vorgesehen, so dass das Trägerelement auch als Steckplatine dient. Von der zumindest einen Spule 60 des Stators 57 erstrecken sich elektrische Kontaktelemente 61, zum Beispiel Drähte, elektrische Leitungen und Kontaktstifte 26, durch die Statorhülse 58. Die Kontaktstifte 26 ragen des Weiteren durch Öffnungen in der Statorhülse 58 und in der Generatorhülse 64 bis in das Trägerelement 25, an dem ein elektrisch leitender Federkontakt 27 vorgesehen ist. Der Federkontakt 27 ist mit der elektrischen Leitung 20, an die der Verbraucher 21 angeschlossen ist, verbunden. Das der Anschlussvorrichtung 2 zugewandte Ende der Leitung 20 ist zwecks einer sicheren Verbindung und beständigen Abdichtung mit einem Vergussmaterial, zum Beispiel Kunstharzen, insbesondere Epoxydharz oder Silikonharzen, das bevorzugt unter Vakuum aufgebracht wird, mit dem Trägerelement 25 verbunden.

Wie insbesondere aus der Figur 3 zu erkennen ist, tritt die elektrische Leitung 20 aus dem Trägerelement 25 und damit aus der Fluidleitvorrichtung 4 aus. Die elektrische Leitung 20 ist in einem Vorsprung 71 des Trägerelements 25 aufgenommen, der durch die Trägerhülse 49 ragt. Um an der Durchtrittsstelle 24 der elektrischen Leitung 20 in der Wand 72 der Fluidleitung 4 ein Ausfließen des Antriebsfluids zu verhindern, ist eine Dichtvorrichtung 23 vorgesehen, die bevorzugt am Trägerelement 25 angeordnet ist. Die Dichtvorrichtung 23 umfasst ein oder mehrere Dichtelement, zum Beispiel O-Ringe, die in Nuten 70 des Trägerelements 25, neben dem Vorsprung 71 aufgenommen sind und im verbauten Zustand die Anschlussvorrichtung 2 und die Trägerhülse 49 kontaktieren.

Die Erfindung ist nicht auf die beschriebenen Ausführungsbeispiele beschränkt, sondern umfaßt alle Ausführungsmöglichkeiten, die das prinzipielle, sinngemäße Funktionsprinzip der Erfindung nicht verändern. So ist es selbstverständlich möglich, das Generatorlaufrad und das Magnetelement des Rotors ohne Abstand, einander kontaktierend auszuführen. Alternativ können das Generatorlaufrad oder Teile davon aus magnetischem Material hergestellt sein, so dass das Laufrad sowohl die Antriebsfunktion als auch die Funktion des Magnetelements des Generators übernimmt.

Anstatt das Magnetelement in Drehung zu versetzen ist es auch möglich, eine oder mehrere Spulen mit dem Laufrad zu verbinden und diese zu rotieren und das Magnetelement nicht rotierbar und als Teil des Stators auszuführen.

Alternativ zu der in Figur 1 dargestellten Ausführungsform, bei der das Antriebsfluid zuerst den Generator 5 und dann das erste Laufrad 3, das das Werkzeug antreibt, durchströmt, ist es selbstverständlich auch möglich, das Antriebsfluid zuerst dem das Werkzeug antreibenden Laufrad und anschließend über eine Fluidleitvorrichtung dem Generator zuzuführen. Die Fluidleitvorrichtung kann dabei zumindest teilweise durch die Außenhülse des Handgriffelements gebildet sein.

Der Generator kann neben der Versorgung einer Beleuchtungsvorrichtung mit Strom auch als Energiequelle für einen oder mehrerer andere Verbraucher dienen, zum Beispiel für einen Diodenlaser, einen Ultraschall- oder Mikrowellengenerator, ein Analgesiegerät, für Messsensoren, zum Beispiel zur Messung von Temperaturen, der Beschleunigung, des Drehmoments, der Drehzahl oder der Schallstärke, für Mikrofone, für Aktoren, zum Beispiel Piezoelementen zur Schwingungsdämpfung, für Schaltkreise zur Verarbeitung oder Aufbereitung von Daten oder Messwerten, für Steuer- und / oder Regelschaltungen, für Datenübertragungsvorrichtungen und Sender, für Vorrichtungen zur Erkennung von an das Handgriffelement anschließbaren Werkzeugen oder für Instrumente und für Anzeigen oder Displays.

Zusätzlich oder alternativ zur Wärmeableitung über das Antriebsfluid kann das Handgriffelement mit einer Kühlvorrichtung zur Ableitung der vom Generator erzeugten Wärme versehen. Die Kühlvorrichtung kann zum Beispiel aktive oder passive Kühlkörper, Wärmerohre (so genannte 'heat pipes') mit einem im Inneren enthaltenen, verdampfenden und kondensierenden Wärmeübertragungsmedium, Wärmeleitpasten oder -pads oder andere bekannte wärmeleitende Vorrichtungen umfassen.

## Patentansprüche

1. Fluidbetriebenes medizinisches, insbesondere dentales, Handgriffelement (1) mit
einer Anschlussvorrichtung (2) zur Verbindung des Handgriffelements (1) mit einer Fluidquelle,
einem durch ein Fluid in Rotation versetzbaren ersten Laufrad (3), das mit einem Werkzeug verbindbar oder verbunden ist, so dass das Werkzeug durch das erste Laufrad (3) in eine Arbeitsbewegung versetzbar ist, und
mit einer zwischen der Anschlussvorrichtung (2) und dem ersten Laufrad (3) angeordneten ersten Fluidleitvorrichtung (4) zur Förderung eines Fluidstroms zum oder vom ersten Laufrad (3), **gekennzeichnet durch**
einen Generator (5) zur Erzeugung elektrischer Energie, wobei der Generator (5) ein zweites in Rotation versetzbares Laufrad (6) umfasst, das mit zumindest einem Teilstrom des in der ersten Fluidleitvorrichtung (4) förderbaren Fluidstroms antreibbar ist.

2. Handgriffelement (1) nach Anspruch 1, **gekennzeichnet durch**
eine zweite Fluidleitvorrichtung zur Verbindung der ersten Fluidleitvorrichtung (4) mit dem Generator (5).

3. Handgriffelement (1) nach Anspruch 1 oder 2, **dadurch gekennzeichnet, dass**
der Generator (5) zumindest teilweise in einer der Fluidleitvorrichtungen (4) aufgenommen ist.

4. Handgriffelement (1) nach Anspruch 3, **dadurch gekennzeichnet, dass**
der Generator (5) zumindest teilweise von einer Außenhülle (7) umgeben ist, die lösbar in die Fluidleitvorrichtung (4) einsetzbar ist.

5. Handgriffelement (1) nach Anspruch 4, **dadurch gekennzeichnet, dass**
die Generatoraußenhülle (7) von der die Generatoraußenhülle (7) umgebenden Innenwand (8) der Fluidleitvorrichtung (4) beabstandet ist, so dass dazwischen ein Fluidkanal (9) zur Leitung des Fluidstroms gebildet ist, und dass ein mit dem Fluidkanal (9) verbundener Durchlass (10) zur Leitung des Fluidstroms zum und / oder vom zweiten Laufrad (6) vorgesehen ist.

6. Handgriffelement (1) nach Anspruch 5, **dadurch gekennzeichnet, dass**
der Durchlass (10) in der Generatoraußenhülle (7) angeordnet ist, so dass der Fluidstrom durch die Generatoraußenhülle (7) leitbar ist.

7. Handgriffelement (1) nach einem der vorhergehenden Ansprüche, **dadurch gekennzeichnet, dass**
das Handgriffelement (1) eine längliche Form mit einem ersten Ende (11) und einem zweiten Ende (12) aufweist, dass die Rotationsachse (13) des zweiten Laufrads (6) sich im Wesentlichen in axialer Richtung zwischen diesen beiden Enden (11, 12) erstreckt und dass das zweite Laufrad (6) derart im Handgriffelement (1) angeordnet ist, dass es vom Fluidstrom tangential und / oder radial anströmbar ist.

8. Handgriffelement (1) nach einem der vorhergehenden Ansprüche, **dadurch gekennzeichnet, dass**
das Handgriffelement (1) eine längliche Form mit einem ersten Ende (11) und einem zweiten Ende (12) aufweist, dass die erste Fluidleitvorrichtung (4) und / oder die zweite Fluidleitung sich zumindest in einem Abschnitt im Wesentlichen in axialer Richtung zwischen den beiden Enden (11, 12) des Handgriffelements (1) erstrecken, so dass der Fluidstrom zumindest in diesem Abschnitt in axialer Richtung förderbar ist, und dass zumindest ein Leitelement (14) zur tangentialen und / oder radialen Umlenkung des Fluidstroms auf das zweite Laufrad (6) vorgesehen ist.

9. Handgriffelement (1) nach einem der vorhergehenden Ansprüche, **dadurch gekennzeichnet, dass**
der Generator (5) eine rotierbare, bevorzugt einteilige, Generatorwelle (15) umfasst, auf der das zweite Laufrad (6) und der Rotor (16) angeordnet sind, wobei zumindest ein Lager, das in verbautem Zustand keine von außerhalb des Handgriffelements (1) einzubringende Schmiermittelzufuhr benötigt, insbesondere ein Gleitlager (17, 18), ein Hydrolager, ein Luftlager oder zumindest ein keramisches Material aufweisendes Wälzlager, zur Lagerung der Generatorwelle (15) vorgesehen ist.

10. Handgriffelement (1) nach Anspruch 9, **gekennzeichnet durch**
ein Punktlager (19) zur axialen Lagerung der Generatorwelle (15), wobei das Punktlager (19) stromabwärts des zweiten Laufrads (6) angeordnet ist.

11. Handgriffelement (1) nach einem der vorhergehenden Ansprüche, **gekennzeichnet durch**
eine elektrische Leitung (20) zur Verbindung des Generators (5) mit einem Verbraucher (21), wobei die elektrische Leitung (20) die Wand (72) der ersten und / oder zweiten Fluidleitvorrichtung (4) durchsetzt, und wobei eine Dichtvorrichtung (23) zur Abdichtung des Durchtritts (24) der elektrischen Leitung (20) **durch** die erste und / oder zweite Fluidleitvorrichtung (4) vorgesehen ist.

12. Handgriffelement (1) nach Anspruch 11, **dadurch gekennzeichnet, dass**
die Dichtvorrichtung (23) an einem Trägerelement (25) angeordnet ist, an dem elektrische Kontaktelemente (26, 27) zur Verbindung der elektrischen Leitung (20) mit dem Generator (5) vorgesehen sind.

13. Handgriffelement (1) nach Anspruch 12, **dadurch gekennzeichnet, dass**
das Trägerelement (25) als Teil der Fluidleitvorrichtung (4) zur Leitung des Fluidstroms zum Generator (5) ausgebildet ist.

14. Handgriffelement (1) nach einem der vorhergehenden Ansprüche, **gekennzeichnet durch**
eine mit dem Generator (5) verbundene und vom Generator (5) mit elektrischer Energie versorgbare Beleuchtungsvorrichtung (22), die einen hermetisch gekapselten Innenraum aufweist, in dem zumindest ein optisches Halbleiterelement angeordnet ist.

15. Handgriffelement (1) nach Anspruch 14, **dadurch gekennzeichnet, dass**
die Beleuchtungsvorrichtung (22) lösbar im Handgriffelement (1) aufgenommen ist.

## Claims

1. A fluid-operated medical, in particular dental, handheld element (1) having
a connecting device (2) for connecting the handheld element (1) to a fluid source,
a first impeller (3) that can be induced by a fluid to rotation and can be or is connected to a tool so that the tool can be induced to execute an working motion by the first impeller (3), and
a first fluid conducting device (4) arranged between the connecting device (2) and the first impeller (3) for conveying a fluid stream toward or away from the first impeller (3), **characterized by**
a generator (5) for generating electric power, wherein the generator (5) comprises a second rotatable impeller (6) that can be driven by at least a substream of the fluid stream conveyable in the first fluid conducting device (4).

2. The handheld element (1) according to Claim 1, **characterized by**
a second fluid conducting device for connecting the first fluid conducting device (4) to the generator (5).

3. The handheld element (1) according to Claim 1 or 2, **characterized in that**
the generator (5) is at least partially accommodated in one of the fluid conducting devices (4).

4. The handheld element (1) according to Claim 3, **characterized in that**
the generator (5) is surrounded at least partially by an outer shell (7) which is releasably insertable into the fluid conducting device (4).

5. The handheld element (1) according to Claim 4, **characterized in that**
the outer shell (7) of the generator (5) is spaced a distance apart from the inside wall (8) of the fluid conducting device (4) surrounding the outer shell (7) of the generator (5), so that a fluid channel (9) for conducting the fluid stream is formed between them and **in that** a passage (10) connected to the fluid channel (9) is provided for conducting the fluid stream toward and / or away from the second impeller (6).

6. The handheld element (1) according to Claim 5, **characterized in that**
the passage (10) is arranged in the outer shell (7) of the generator (5), so that the fluid stream can be conducted through the outer shell (7) of the generator (5).

7. The handheld element (1) according to any one of the preceeding Claims, **characterized in that**
the handheld element (1) has an elongated shape with a first end (11) and a second end (12), **in that** the axis of rotation (13) of the second impeller (6) extends essentially axially between these two ends (11, 12) and **in that** the second impeller (6) is arranged in the handheld element (1) in such a way that the fluid stream can flow toward it tangentially and/or radially.

8. The handheld element (1) according to any one of the preceeding Claims, **characterized in that**
the handheld element (1) has an elongated shape with a first end (11) and a second end (12), **in that** the first fluid conducting device (4) and/or the second fluid-conducting device extend essentially axially between the two ends (11, 12) of the handheld element (1) at least for a section so that the fluid stream can be conveyed axially in at least this section and **in that** at least one conducting element (14) is provided for tangential and/or radial deflection of the fluid stream onto the second impeller (6).

9. The handheld element (1) according to any one of the preceeding Claims, **characterized in that**
the generator (5) comprises a rotatable generator shaft (15), preferably in one part, on which the second impeller (6) and the rotor (16) are arranged, wherein at least one bearing which does not require any supply of lubricant to be introduced from outside the handheld element (1) when in the installed state, in particular a friction bearing (17, 18), a hydro bearing, an air bearing or a roller bearing having at least one ceramic material is provided for bearing support of the generator shaft (15).

10. The handheld element (1) according to Claim 9, **characterized by**
a spot bearing (19) for axial bearing support of the generator shaft (15) wherein the spot bearing (19) is arranged downstream from the second impeller (6).

11. The handheld element (1) according to any one of the preceeding Claims, **characterized by**
an electric line (20) for connecting the generator (5) to a consumer (21), wherein the electric line (20) passes through the wall (72) of the first and/or second fluid conducting device (4) and wherein a sealing device (23) is provided for sealing the passage (24) of the electric line (20) through the first and/or second fluid conducting device (4).

12. The handheld element (1) according to Claim 11, **characterized in that**
the sealing device (23) is arranged on a carrier element (25) on which electric contact elements (26, 27) are provided for connecting the electric line (20) to the generator (5).

13. The handheld element (1) according to Claim 12, **characterized in that**
the carrier element (25) is designed as part of the fluid conducting device (4) for conducting the fluid stream to the generator (5).

14. The handheld element (1) according to according to any one of the preceeding Claims, **characterized by**
a lighting device (22) which is connected to the generator (5) and can be supplied with electric power by the generator (5), said lighting device (22) having a hermetically encapsulated interior space in which at least one optical semiconductor element is arranged.

15. The handheld element (1) according to Claim 14, **characterized in that**
the lighting device (22) is detachably accommodated in the handheld element (1).

## Revendications

1. Element de poignée (1) entraîné par fluide, médical, en particulier dentaire, comprenant un dispositif de connexion (2) pour relier l'élément de poignée (1) à une source de fluide,
une première roue mobile (3) pouvant être mise en rotation par un fluide, qui peut être reliée ou est reliée à un outil, de façon à ce que l'outil puisse être mis en mouvement de travail par la première roue mobile (3), et
un premier dispositif de conducteur de fluide (4) placé entre le dispositif de connexion (2) et la première roue mobile (3) pour acheminer un flux de fluide vers ou depuis la première roue mobile (3), **caractérisé par**
un générateur (5) pour produire de l'énergie électrique, le générateur (5) comprenant une deuxième roue mobile (6) pouvant être mise en rotation qui peut être entraînée avec au moins un courant partiel du flux de fluide pouvant être transporté dans le premier dispositif de conducteur de fluide (4).

2. Element de poignée (1) selon la revendication 1, **caractérisé par**
un deuxième dispositif de conducteur de fluide pour relier le premier dispositif de conducteur de fluide (4) au générateur (5).

3. Element de poignée (1) selon la revendication 1 ou 2, **caractérisé en ce que**
le générateur (5) est au moins reçu partiellement dans l'un des dispositifs de conducteurs de fluide (4).

4. Element de poignée (1) selon la revendication 3, **caractérisé en ce que**
le générateur (5) est au moins entouré partiellement par une enveloppe extérieure (7) qui peut être intégrée de manière séparable dans le dispositif de conducteur de fluide (4).

5. Element de poignée (1) selon la revendication 4, **caractérisé en ce que**
l'enveloppe extérieure du générateur (7) est écartée de la paroi intérieure (8) du dispositif de conducteur de fluide (4) entourant l'enveloppe extérieure du générateur (7), de façon à former entre eux un canal de fluide (9) pour conduire le flux de fluide et qu'un passage (10) relié au canal de fluide (9) est prévu pour diriger le flux de fluide vers et / ou depuis la deuxième roue mobile (6).

6. Element de poignée (1) selon la revendication 5, **caractérisé en ce que**
le passage (10) est placé dans l'enveloppe extérieure du générateur (7) de façon à ce que le flux de fluide puisse être dirigé à travers l'enveloppe extérieure du générateur (7) leitbar ist.

7. Element de poignée (1) selon l'une des revendications précédentes, **caractérisé en ce que**
l'élement de poignée (1) présente une forme longitudinale avec une première extrémité (11) et une deuxième extrémité (12), que l'axe de rotation (13) de la deuxième roue mobile (6) s'étend essentiellement en direction axiale entre ces deux extrémités (11, 12) et que la deuxième roue mobile (6) est ainsi placée dans l'élément de poignée (1) qu'elle peut être touchée de manière tangentielle et / ou radiale par le flux de fluide.

8. Element de poignée (1) selon l'une des revendications précédentes, **caractérisé en ce que**
l'élement de poignée (1) présente une forme longitudinale avec une première extrémité (11) et une deuxième extrémité (12), que le premier dispositif conducteur de fluide (4) et / ou le deuxième dispositif conducteur de fluide s'étendent au moins dans une section essentiellement en direction axiale entre les deux extrémités (11, 12) de l'élement de poignée (1) de façon à ce que le flux de fluide puisse être acheminé au moins dans cette section en direction axiale et qu'au moins un élément conducteur (14) est prévu pour la déviation tangentielle et / ou radiale du flux de fluide sur la deuxième roue mobile (6).

9. Element de poignée (1) selon l'une des revendications précédentes, **caractérisé en ce que**
le générateur (5) comprend un arbre de générateur (15) tournant, de préférence monobloc, sur lequel la deuxième roue mobile (6) et le rotor (16) sont placés, au moins un palier, qui dans l'état monté ne nécessite alimentation en lubrifiant à apporter extérieurement à l'élément de poignée (1), en particulier un palier lisse (17, 18), un palier hydraulique, un palier pneumatique ou un palier à roulement présentant au moins un matériau céramique étant prévu pour positionner l'arbre de générateur, (15).

10. Element de poignée (1) selon la revendication 9, **caractérisé par**
un palier à un seul point (19) pour le positionnement axial de l'arbre de générateur (15), le palier à un seul point (19) étant placé en aval de la deuxième roue mobile (6).

11. Element de poignée (1) selon l'une des revendications précédentes, **caractérisé par**
une ligne électrique (20) pour relier le générateur (5) à un utilisateur (21), la ligne électrique (20) traversant la paroi (72) du premier et / ou deuxième dispositif conducteur de fluide (4) et un élément d'étanchéité (23) pour rendre étanche le passage (24) de la ligne électrique (20) étant prévu à travers le premier et / ou deuxième dispositif conducteur de fluide (4).

12. Element de poignée (1) selon la revendication 11, **caractérisé en ce que**
l'élément d'étanchéité (23) est placé sur un élément porteur (25) sur lequel des éléments de contact électriques (26, 27) sont prévus pour relier la ligne électrique (20) au générateur (5).

13. Element de poignée (1) selon la revendication 12, **caractérisé en ce que**
l'élément porteur (25) est formé comme partie du dispositif conducteur de fluide (4) pour conduire le flux de fluide vers le générateur (5).

14. Element de poignée (1) selon l'une des revendications précédentes, **caractérisé par**
un dispositif d'éclairage (22) relié au générateur (5) et pouvant être alimenté en énergie électrique par le générateur (5) qui présente un espace intérieur encapsulé hermétique dans lequel au moins un élément semi-conducteur optique est placé.

15. Element de poignée (1) selon la revendication 14, **caractérisé en ce que**
le dispositif d'éclairage (22) est reçu de manière séparable dans l'élément de poignée (1).
